Europäisches Patentamt

European Patent Office

Office européen des brevets

(19)

(11) Veröffentlichungsnummer: **0 164 543**
**B1**

(12) # EUROPÄISCHE PATENTSCHRIFT

(45) Veröffentlichungstag der Patentschrift:
12.10.88

(51) Int. Cl.⁴: **F 16 C 23/08**

(21) Anmeldenummer: **85105121.9**

(22) Anmeldetag: **26.04.85**

(54) **Pneumatisches Motorlager.**

(30) Priorität: **07.06.84 DE 3421134**

(43) Veröffentlichungstag der Anmeldung:
**18.12.85 Patentblatt 85/51**

(45) Bekanntmachung des Hinweises auf die Patenterteilung:
**12.10.88 Patentblatt 88/41**

(84) Benannte Vertragsstaaten:
**AT CH DE FR GB IT LI**

(56) Entgegenhaltungen:
**DE-U-7 632 874**
**GB-A-2 086 530**
**US-A-4 154 206**

**PATENT ABSTRACTS OF JAPAN, Band 7, Nr. 141
(M-223) 1286 , 21. Juni 1983; & JP - A - 58 54248
(TOYOTA JIDOSHA KOGYO K.K.) 31.03.1983**

(73) Patentinhaber· **AUDI AG, Postfach 220, D-8070
Ingolstadt (DE)**

(72) Erfinder: **van den Boom, Johannes, Marie- Luise-
Fleisser- Strasse 16, D-8073 Kösching (DE)**
Erfinder: **Aden, Bodo, Hauptstrasse 17, D-8069
Köningsfeld (DE)**
Erfinder: **Hollerweger, Heinz, Effnerstrasse 20,
D-8070 Ingolstadt (DE)**
Erfinder: **Kuipers, Geert, Am Kirchenweg 1a,
D-8070 Ingolstadt (DE)**

(74) Vertreter: **Le Vrang, Klaus, AUDI AG Postfach 220
Patentabteilung I/EQP, D-8070 Ingolstadt (DE)**

EP 0 164 543 B1

## Beschreibung

Die Erfindung betrifft ein pneumatisches Motorlager gemäß dem Oberbegriff des Anspruches 1.

Derartige Lager verwenden mit einem Gas auffüllbare Kammern, die zwischen Lagerkern und Widerlager angeordnet sind und die Schwingungen, die vom Lagerkern auf das Widerlager übertragen werden, dämpfen sollen.

Ein gattungsgemäßes Motorlager ist aus der GB-A-2 086 530 bekannt. Zwei Gaskammern sind über eine Drossel verbunden. Weiterhin ist zwischen den beiden Kammern eine weiche, begrenzt auslenkbare Membran vorgesehen, so daß kleine Volumenänderungen bei diesem bekannten Lager durch die Membran ausgeglichen werden und in diesem Zusammenhang das Lager sehr weich ist. Größere Volumenänderungen werden durch ein Überströmen des Gases durch die Drossel ausgeglichen, das Lager ist für derartige Auslenkungen härter.

Aufgabe der Erfindung ist es, ein pneumatisches Motorlager der gattungsgemäßen Art zu schaffen, das in seinen Lagereigenschaften auf Betriebssituationen verschiedener Art einstellbar ist und für Betriebszustände mit sehr großen Amplituden weich eingestellt werden kann.

Die Aufgabe wird gelöst durch den Patentanspruch.

Erfindungsgemäß wird ein pneumatisches Motorlager geschaffen, bei dem die zwei Kammern zusätzlich zur Verbindung über die Drossel und über die Kopplung mittels einer weichen Membran über eine weitere, wahlweise verschließbare Verbindungsöffnung verbunden sind. Diese Verbindungsöffnung kann bei Betriebszuständen, in denen sehr große Amplituden vorliegen, die zu akustischen Beeinträchtigungen führen würden, geöffnet werden, so daß hier durch das Lager sehr weich wird. Vorteilhafterweise geschieht dies z. B. beim Anlassen oder Abstellen einer Brennkraftmaschine in einem Kraftfahrzeug, bei Leerlaufdrehzahlen oder bei niedrigen Anfahrdrehzahlen.

Es wird im folgenden die Erfindung anhand der Figuren im einzelnen erläutert. Es zeigen:

Fig. 1 einen Teilschnitt durch das erfindungsgemäße Motorlager; und
Fig. 2 das Steuerglied gemäß Fig. 1 im Detail.

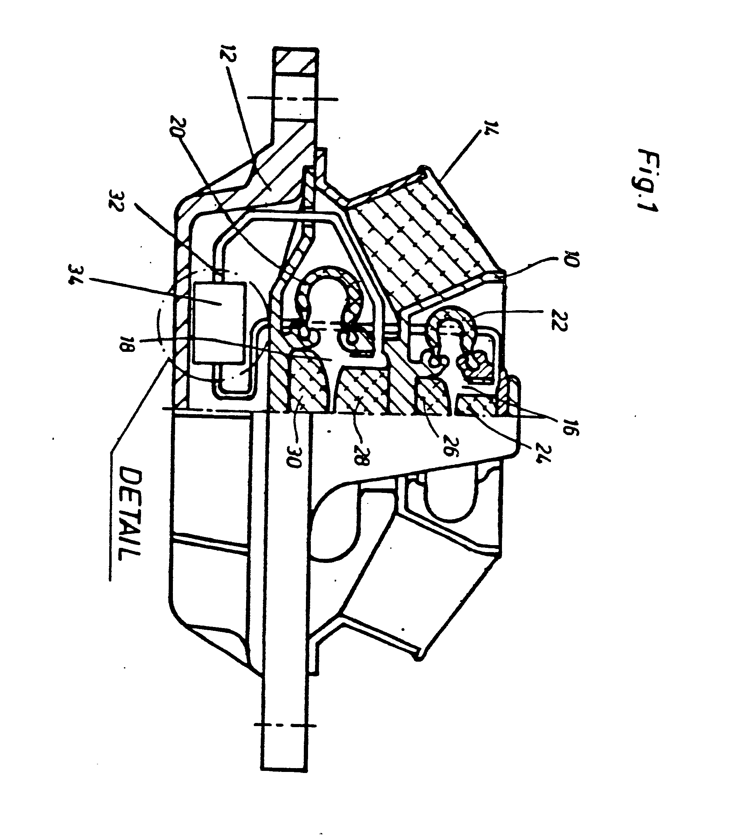

In Fig. 1 ist der Schnitt durch ein pneumatisches Motorlager gezeigt. Ein Lagerkern 10 lagert bei Verwendung in Kraftfahrzeugen die Brennkraftmaschine, die auf den Lagerkern übertragenen Schwingungen werden über einen Gummiblock 14 auf das Widerlager 12 das karosserieseitig befestigt ist, übertragen.

Um die Übertragungseigenschaften nicht allein durch den Gummiblock 14 zu bestimmen, sind pneumatische Kammern zwischen Lagerkern 10 und Widerlager 12 vorgesehen, nämlich eine kleinere Kammer 16 und eine größere Kammer 18. Während die Kammern auf ihren Ober- und Unterseiten durch Gummiblöcke 24 und 26 bzw. 28 und 30 begrenzt sind, die gleichzeitig beim Durchfedern aufeinanderprallen und somit eine gewisse Dämpfung bewirken, sind die Seitenwände 20 und 22 der Kammern 16 und 18 verhältnismäßig biegeweich ausgebildet.

Die beiden Kammern 16 und 18 sind über eine Leitung 32 miteinander verbunden. Zu beachten ist, daß die wirksame Druckfläche der Kammer 18 größer ausgebildet ist als die der Kammer 16, so daß bei Einbringen eines Druckes das Lager proportional mit dem Druck aufgrund seiner pneumatischen Kammern eine gewisse statische Last tragen kann. Die dazu parallel wirksamen Gummiflächen 14 tragen ebenfalls zur statischen Lasttragung bei, außerdem bewirken sie eine Führungskraft in radialer Richtung, da die Seitenwände 20 und 22 der pneumatischen Kammern 16 und 18 weich ausgebildet sind.

Die Federeigenschaften des pneumatischen Lagers werden einerseits bestimmt durch die Gummiblöcke 14, andererseits durch das Überströmen des unter Druck stehenden Fluids in den Kammern 16 und 18. Das Überströmen erfolgt über die Leitung 32, und die Eigenschaften des Überströmens können durch ein Steuerglied 34 gezielt beeinflußt werden.

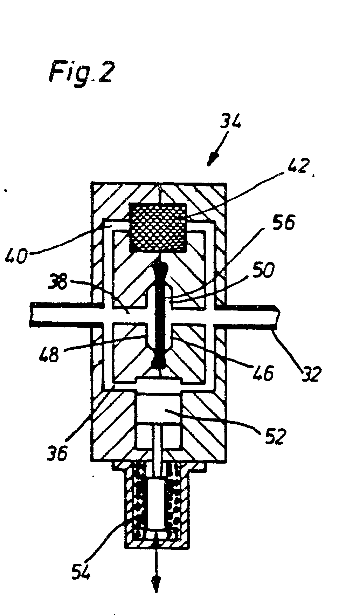

Der Aufbau des Steuergliedes 34 ist in Fig. 2 im Detail dargestellt. Das Steuerglied 34 ist in die Verbindungsleitung 32 zwischen den beiden Kammern 16 und 18 eingelassen, in der dargestellten Ausführungsform ist die Leitung 32 im Innern des Steuergliedes in drei Zweige 36, 38 und 40 aufgeteilt. Im Zweig 40 ist eine Drossel 42 vorgesehen, hier dargestellt durch ein poröses Bauteil, damit einerseits ein Durchströmen von Gas, vorzugsweise Luft, stattfinden kann, andererseits die Drosselwirkung durch einen zu geringen Widerstand nicht verhindert wird. Der Zweig 38 führt in eine Kammer 46, die auf ihrer anderen Seite mit der abführenden Leitung 32 verbunden ist. Durch die Kammer 46 kann jedoch kein Fluid strömen, da eine gasdichte Membran 56 vorgesehen ist. Die Membran ist jedoch verhältnismäßig elastisch, so daß ein sich Aufbauen von Druck auf der einen Seite zu einem Ausbeulen der Membran 56 führt, bis sie an die Kammerwand 48 oder 50 zur Anlage kommt, so daß ein weiteres Ausbeulen nicht möglich ist, die Federeigenschaften der Membran 56 sind somit begrenzt auf Amplituden, die die Membran 56 nicht zur Anlage an die Seitenwand 48 bzw. 50 bringen. Für kleine Amplituden ist somit das Lager verhältnismäßig weich aufgrund der Membran 56, für größere Amplituden wird das Lager hart, vor allem bei höherfrequenten Schwingungen, bei denen die Drossel 42 "sperrt", d. h. ein genügend schneller Gasaustausch findet durch die Drossel 42 zwischen den Kammern 16 und 18 nicht mehr statt.

Der dritte Zweig 36 ist wahlweise durch einen Schieber 52 öffen- und verschließbar. Damit kann bei großen Amplituden, wenn die Membran 56 bereits zur Anlage an die Wand 48 oder 50 gekommen ist, durch Öffnen des Schiebers 52 der Zweig 36 freigegeben werden, so daß die Drossel 42 umgangen wird und das Lager in seinen Dämpfungseigenschaften weiterhin weich bleibt. Der Schieber 52 läßt sich beispielsweise durch einen Elektromagneten 54 betätigen.

Zum Erreichen einer geringen akustischen Geräuschübertragung bzw. einer geringen Lagersteifigkeit kann ein Druckausgleich zwischen den Kammern 16 und 18 über die weiche, jedoch anschlagbegrenzte Membran 56 stattfinden. Bei größeren Bewegungsamplituden zwischen Lagerkern 10 und Widerlager 12 wird ein Druckausgleich über die Drossel 42 mit entsprechender gewünschter Dämpfung erfolgen.

Bei besonderen Betriebszuständen des Motors, bei denen sehr große Amplituden vorliegen, die zu akustischen Beträchtigungen führen, wird das Ventil 52 geöffnet, so daß hierbei das Lager sehr weich ist. Dies ist z. B. der Fall beim Anlassen und Abstellen eines Motors, bei Leerlaufdrehzahl oder bei niedrigen Anfahrdrehzahlen. Günstigerweise ist bei diesen Fällen nicht auch eine gleichzeitige Dämpfung erforderlich, so daß das Lager auf diese Betriebszustände optimal abgestimmt ist. Bei höheren Drehzahlen, wenn die dämpfende Wirkung auf die Motorbewegungen notwendig wird, wird der Schieber 52 über die Spule des Elektromagneten 54 geschlossen, so daß nunmehr die gewünschte Lagerdämpfung einsetzt.

Eine Steuerung des Elektromagneten 54 ist beispielsweise über die Drehzahl möglich.

## Patentanspruch

Pneumatisches, eine statische Last aufnehmbares Motorlager, mit einem Lagerkern (10), einem Widerlager (12), einer elastischen Verbindung (24) zwischen Lagerkern und Widerlager, mit mindestens zwei Kammern (16, 18), die durch eine Relativbewegung zwischen Lagerkern (10) und Widerlager (12) in ihrem Volumen beeinflußbar sind, wobei die Kammern über Leitungen (32) miteinander verbunden sind und in den Verbindungen eine Drossel (42) und ein Membran (56), die mit geringer Federkonstante elastisch zur Volumenänderung mindestens einer der Kammern (16, 18) verformbar ist, angeordnet sind, dadurch gekennzeichnet, daß im Steuerteil (34) eine wahlweise verschließbare Verbindungsöffnung (52) zwischen den beiden Kammern (16, 18) vorgesehen ist.

## Claim

Pneumatic engine mount capable of supporting a static load, with a mounting core (10), a support (12), an elastic connection (24) between the mounting core and the support, with at least two chambers (16, 18) the volumes of which can be influenced by relative movement between the mounting core (10) and the support (12), the chambers being connected to one another by ducts (32), and a throttle (42) and a diaphragm (56), which can be elastically deformed with a low elastic constant for changing the volume of at least one of the chambers (16, 18), being positioned in the connection, characterized in that a connecting opening (52) which can be closed as required is provided in the control element (34) between the two chambers (16, 18).

## Revendication

Support pneumatique de moteur, capable d'absorber une charge statique, conprenant un coeur de support (10), un contre-appui (12), une jonction élastique (14) entre le coeur de support et la contre-appui, avec au moins deux chambres (16, 18) dont les volumes peuvent être modifies par un mouvement relatif entre le coeur de support (10) et le contre-appui (12), les chambres étant en communication mutuelle par des conduites (32), un étranglement (42) et une membrane (56) qui est déformable élastiquement avec une faible constante de rappel pour la modification du volume de l'une des chambres (16, 18) au moins, étant disposés dans les conduites de communication, caractérisé en ce qu'il est prévu, dans l'élément de commande (34), une ouverture (52) de communication entre les deux chambres (16, 18), ouverture qui peut être obturée selon les nécessités.

Fig.1

# Fig.2